# EUROPÄISCHE PATENTSCHRIFT

(11) **EP 1 477 344 B1**
(45) Veröffentlichungstag und Bekanntmachung des Hinweises auf die Patenterteilung: **28.02.2007**
(21) Anmeldenummer: 04007445.2
(22) Anmeldetag: 26.03.2004
(51) Int. Cl.: B60H 1/00

(54) **Ventil**
Valve
Soupape

(30) Priorität: 12.05.2003 DE 10321154
(43) Veröffentlichungstag der Anmeldung: 17.11.2004
(73) Patentinhaber: ROBERT BOSCH GMBH, 70442 Stuttgart (DE)
(72) Erfinder: Hess, Juergen, 76534 Baden-Baden (DE); Reeb, Georg, 77815 Buehl Eisental (DE)

(56) Entgegenhaltungen:
- DE-A- 2 729 570
- DE-A- 19 754 257
- DE-A- 19 837 694

## Beschreibung

### Stand der Technik

Die Erfindung geht aus von einem Ventil nach der Gattung des unabhängigen Anspruchs.

Derartige Ventile sind beispielsweise aus flüssigkeitsgeregelten Heiz- beziehungsweise Kühlanlagen von Kraftfahrzeugen bekannt. Ein auf einer Hubstange des Ventils befestigtes Ventilglied regelt den Durchfluss zwischen einem Einlasskanal und mindestens einem Auslasskanal. Das Ventil kann beispielsweise in Abhängigkeit von Temperaturen in der Heiz- und/oder Klimaanlage des Kraftfahrzeuges beziehungsweise des Fahrgastraumes angesteuert werden.

Ventile dieser Art weisen zur Zeit noch hauptsächlich einen elektromagnetischen Aktuator auf, der durch eine erregte Magnetspule das Ventil schließt, indem der Aktuator auf einen, mit der Hubstange des Ventils verbundenen Anker einwirkt. Nachteil bei dieser Art des Ventils ist es, dass die Betätigung des Aktuators zu einem abrupten Schließen und damit zu Druckstörungen im Flüssigkeitssystem des Kühlkreislaufs führt.

So kommt es bei Heizungsanlagen in Fahrzeugen, bei denen die Wassermenge durch Takten der Ventile geregelt wird, aufgrund der kurzen Schließzeiten der Ventile und der Strömungsenergie des Wassers zu Druckspitzen beim Schließen der Ventile. Dies führt insbesondere im NKW-Bereich zu hohen Bauteilbelastungen mit negativen Auswirkungen beispielsweise auch auf einen Wärmetauscher im Heizkreislauf. Die derzeitig bekannten Wasserventile für den Heiz- und/oder Kühlkreislauf von Kraftfahrzeugen sind darüber hinaus bei Ausübung der beschriebenen Schaltfunktion teilweise sehr laut.

Aus der DE 197 54 257 A1 ist ein Magnetventil für eine flüssigkeitsgeregelte Heiz- und/oder Kühlanlage bekannt, welches einen Zulaufkanal und mindestens einen Ablaufkanal aufweist, deren gegenseitige Verbindung durch ein elektromagnetisch geschaltetes Ventilglied in einer ersten Schaltstellung hergestellt und in einer zweiten Schaltstellung gesperrt wird. Das Ventil der DE 197 54 257 A1 weist an seinem Ventilschaft ein elastisches Element in Form einer Feder auf, die die Geschwindigkeit des Ventilschaftes beim Schließen des Ventilgliedes verzögert. Dazu ist das Federelement zwischen dem Ventilglied und dem Ventilschaft angeordnet. Aufgrund der elastischen Entkopplung von Hubstangen und Ventilglied wird das Ventilglied beim Schließen des Ventils langsamer in den Ventilsitz geschoben, so dass auf diese Weise Druckspitzen reduziert und Schaltgeräusche unterdrückt werden können.

In einer zweiten Ausführungsform des Wasserventils des DE 197 54 257 A1 ist auf dem Ventilschaft zusätzlich eine Dämpfungsscheibe fest angeordnet, die sich in einer mit einer viskosen Flüssigkeit gefüllten Dämpfungskammer bewegt. Zur Abstimmung der Dämpfungswirkung für das Ventilglied sind in der Dämpfungsscheibe mehrere Drosselbohrungen vorgesehen, die den Widerstand der Dämpfungsscheibe gegenüber der viskosen Flüssigkeit bestimmen und somit in gewünschter Weise die Bewegung der Hubstange verzögern.

Aus der US 4,364,541 ist ein Sicherheitsventil bekannt, das eine zweiteilige Hubstange besitzt. Während der erste Teil der Hubstange mit einem Aktuator für das Ventil verbunden ist, trägt der zweite Teil der Hubstange zwei beabstandet voneinander angeordnete Ventilglieder. Die beiden Teile der Hubstange der US 4,364,541 sind in axialer Richtung der Hubstange gegeneinander verschiebbar. Die relative Beweglichkeit der beiden Hubstangenteile zueinander wird über ein elastisches Federelement vermittelt.

Nachteilig bei dem in der US 4,364,541 beschriebenem Sicherheitsventil ist die aufwendige gegenseitige Entkopplung der beiden Hubstangenanteile. Zusätzlich muss die relative Beweglichkeit der beiden Hubstangenanteile bei diesem Ventil des Standes der Technik durch ein zusätzliches Federelement eingestellt werden. Ein solches Ventil bedarf, ebenso wie das Ventil der DE 197 54 257 A1, einer aufwendigen Montage, nicht zuletzt aufgrund der Vielzahl der Einzelteile. Zudem führt die komplexe Ausgestaltung der beweglichen Teile dieser Ventile zu erhöhten Anforderungen an den Aktuator, die wiederum mit einem erhöhten Gewicht und einen großen Einbauvolumen der Ventileinheit einher gehen.

Aus der DE 27 29 570 A ist ein elektromagnetisches Sicherheitsabsperrventil bekannt, welches ein, infolge eines Druckabfalls bei Rohrbruch selbsttätig mechanisch schlie-ßendes, eine Rohrbruchsicherung darstellendes, Ventil bildet. Bei der Vorrichtung der DE 27 29 570 A ist das Rohrbruchsicherungselement mit dem Schließkörper des elektromagnetischen Sicherheitsabspenventils vereinigt. Bei Durchströmen des Ventils wirkt auf den Schließkörper eine Druckdifferenz. Bei Überschreiten eines bestimmten Durchflusswertes übersteigt die durch sie ausgeübte Kraft die Vorspannung einer Feder und das Ventil wird bei weiterem Anstieg der Strömungsgeschwindigkeit geschlossen. Dabei bewegt sich der Schließkörper bei unverändert bleibender Stellung einer Führungsspindel in Richtung auf den Ventilsitz und wird durch den sich durch die Verringerung des Strömungsquerschnittes am Ventilsitz ergebenen Druckanstieg auf den Ventilsitz gepresst.

Aus der DE 198 37 694 A1 ist ein Koaxialventil mit Gegendruckrückentlastung bekannt, bei dem innerhalb des Ventilgehäuses ein Rückschlag- oder Überdruckventil angeordnet ist, wobei das koaxialventildurchströmende Medium von der Auslassseite des Koaxialventils über das Rückschlag- oder Überdruckventil in den das Ventilglied umgebenden Raum gelangen kann, sofern der Druck im Auslassstutzen des Koaxialventils größer als im Raum ist oder die Druckdifferenz zwischen dem Auslassstutzen und dem Raum einen bestimmten Wert überschreitet.

### Vorteile der Erfindung

Das erfindungsgemäße Ventil mit den Merkmalen des Hauptanspruchs hat demgegenüber den Vorteil, dass durch einfache Maßnahmen, die während des Schließvorganges auftretenden Druckspitzen reduziert werden können.

Das erfindungsgemäße Ventil weist ein Ventilglied mit einem Dichtkegel auf, in das ein Überdruckventil integriert ist. Durch die Integration des Überdruckventils in das Ventilglied bleibt die Größe des Ventils in vorteilhafter Weise unverändert. Auch auf die Ansprechzeit des Ventils hat eine solche Maßnahme keinen negativen Einfluss, da die Masse des Ventilgliedes nicht wesentlich geändert wird.

Das Ventilglied des erfindungsgemäßen Ventils beziehungsweise dessen Dichtkegel ist dabei derart modifiziert, dass bei Erreichen eines bestimmten Druckes (Grenzdruck) im Ventil, unabhängig von der Position des Ventilgliedes, das Ventil geöffnet wird und eine Verbindung zwischen dem Einlasskanal und dem Auslasskanal des Ventils freigegeben wird. Auf diese Weise kommt es insbesondere beim Schließvorgang des Ventils zu einem Druckausgleich zwischen dem Einlasskanal und dem Auslasskanal. Unerwünschte Druckspitzen beim schnellen Schließen des Ventils werden in vorteilhafter Weise vermindert beziehungsweise vermieden.

In vorteilhafter Weise ist das Überdruckventil des Ventilgliedes derart ausgebildet, dass bei Erreichen eines Grenzdruckes auf das Ventilglied der mindestens eine Einlasskanal mit dem mindestens einen Auslasskanal über das Überdruckventil verbunden ist.

Durch die in den weiteren Ansprüchen aufgeführten Maßnahmen sind vorteilhafte Weiterbildungen und Verbesserungen des im Anspruch 1 angegebenen Ventils möglich.

In einer ersten Ausführungsform des erfindungsgemäßen Ventils ist das Überdruckventil als Kugelventil ausgebildet und weist mindestens ein Kugelelement auf, das einen Verbindungskanal zwischen dem mindestens einen Einlasskanal und dem mindestens einen Auslasskanal öffnet beziehungsweise verschließt.

Das Kugelelement lässt sich in einfacher und zuverlässiger Weise durch ein Federelement vorspannen, so dass der Verbindungskanal zwischen dem mindestens einen Einlasskanal und dem mindestens einen Auslasskanal für Drücke unterhalb des Grenzdruckes geschlossen ist.

In einer weiteren vorteilhaften Ausführungsform des erfindungsgemäßen Ventils ist das Überdruckventil in Form eines Blattfederventils ausgebildet.

Dabei wirkt mindestens eine Blattfeder mit mindestens einer im Dichtkegel des Ventilgliedes angeordneten Bohrung derart zusammen, dass eine Verbindung zwischen dem Einlasskanal und einem Auslasskanal des Ventils geöffnet beziehungsweise verschlossen wird.

Der Hub der mindestens einen Blattfeder wird dabei durch ein Anschlagelement in Form einer Haltescheibe begrenzt. In vorteilhafter Weise sorgt die Haltescheibe dabei auch für die axiale Fixierung der Blattfeder auf der Hubstange des Ventils.

Die Verwendung des erfindungsgemäßen Ventils, beispielsweise in der Ausführungsform eines elektromagnetischen Taktventils für den Kühl- und/oder Heizkreislauf eines Kraftfahrzeuges ist mit Vorteilen gegenüber den entsprechenden Ventilen des Standes der Technik möglich, da insbesondere die Druckspitzen der getakteten elektromagnetischen Aktuatoren ,die aufgrund des schnellen Schließens des Ventils auftreten, reduziert werden können.

Das erfindungsgemäße Ventil ermöglicht somit auf eine einfache Weise eine deutliche Reduzierung der Druckspitzen und der Geräuschbildung beim Schalten des Ventils.

### Zeichnung

In der Zeichnung sind zwei Ausführungsbeispiele eines erfindungsgemäßen Ventils dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:
- Figur 1: einen Querschnitt durch ein elektromagnetischen Taktventils gemäß dem Stand der Technik,
- Figur 2: eine Detailansicht der Ventilkammer des erfindungsgemäßen Ventils mit einem ersten Ausführungsbeispiel für ein Ventilglied,
- Figur 3: eine Detailansicht der Ventilkammer des erfindungsgemäßen Ventils mit einem zweiten Ausführungsbeispiel für ein Ventilglied.

### Beschreibung der Ausführungsbeispiele

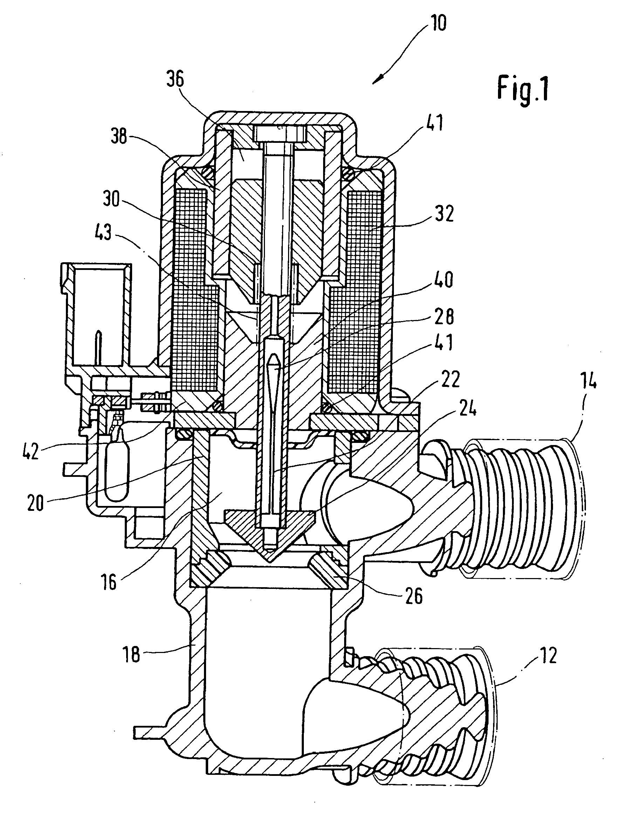

Figur 1 zeigt ein Ventil in der Ausführungsform eines getakteten Magnetventils gemäß dem Stand der Technik. Das Magnetventil 10 besitzt einen Einlasskanal 12 und einen Auslasskanal 14, die über eine Ventilkammer 16 miteinander verbunden sind. Die Ventilkammer 16 wird gebildet durch eine in das Ventilgehäuse 18 eingesetzte Ventilkammereinheit 20. Zwischen den Kanälen 12 und 14 ist ein Ventilglied 22 vorgesehen, welches in der Ventilkammer 16 beweglich angeordnet ist und über einen dichtenden Ventilkegel 24 mit einem Ventilsitz 26 der Ventilkammer 16 zusammenwirkt. Der Ventilsitz 26 ist im Ausführungsbeispiel der Figur 1 als ein elastischer, die Ventilkammer 16 gegenüber dem Einlasskanal 12 begrenzender Ring ausgeführt. Aufgrund des elastischen Ventilsitzes 26 muss der Ventilkegel 24 des Ventilgliedes 22 in diesem Ausführungsbeispiel nicht notwendigerweise auch elastisch sein.

Der Dichtkegel 24 des Ventilgliedes 22 ist auf einer Hubstange 28 axial gesichert. Auf der Hubstange 28 ist zudem ein Anker 30 befestigt, der mit einer Magnetspule 32 zusammenwirkt und den elektromagnetischen Aktuator 34 des Ventils 10 bildet. Der Anker 30 ist in einem Ankerraum 36 des Aktuators 34 durch eine Führungsbuchse 38 axial verschiebbar geführt.

Das Federelement 43 verschiebt das Ventilglied 22 in seine geöffnete Stellung, so dass der Dichtkegel 24 vom Ventilsitz 26 abgehoben wird. In anderen Ausführungsformen des erfindungsgemäßen Ventils kann auch der vorherrschende Flüssigkeitsdruck, beispielsweise in einem zu regelnden Heiz- und/oder Kühlkreislauf eines Kraftfahrzeuges, der sich im Einlasskanal 12 des Ventils einstellt, das Ventilglied 22 in seine geöffnete Stellung anheben.

Wird die Magnetspule 32 erregt, so zieht ein Ankerkern 40, der mit einem Rückschlussjoch 42 des Aktuators 34 in Verbindung steht, den Anker 30 entgegen der Kraft einer im Ankerraum 36 angeordneten Ventilfeder 43 und dem Flüssigkeitsdruck im Einlasskanal 12, an und das Ventilglied 22 verschließt die Verbindung zwischen dem Einlasskanal 12 und dem Auslasskanal 14 des Ventils 10, indem der Dichtkegel 24 auf den Ventilsitz 26 aufgedrückt wird. Die Magnetspule 32 ist über Dichtringe 41 gegenüber dem Ankerraum 36 und damit gegenüber eventuell eindringender Flüssigkeit abgedichtet.

Nachteil bei diesen Ventilen gemäß des Standes der Technik ist es, dass die Betätigung des Aktuators zu einem abrupten Schließen und damit zu Druckstörungen im Flüssigkeitssystem des Kühlkreislaufs führt. So kann es bei Heizungsanlagen in Fahrzeugen, bei denen die Wassermenge durch Takten solcher Ventile geregelt wird, aufgrund der kurzen Schließzeiten der Ventile und der Strömungsenergie des Wassers zu Druckspitzen beim Schließen des Ventils kommen.

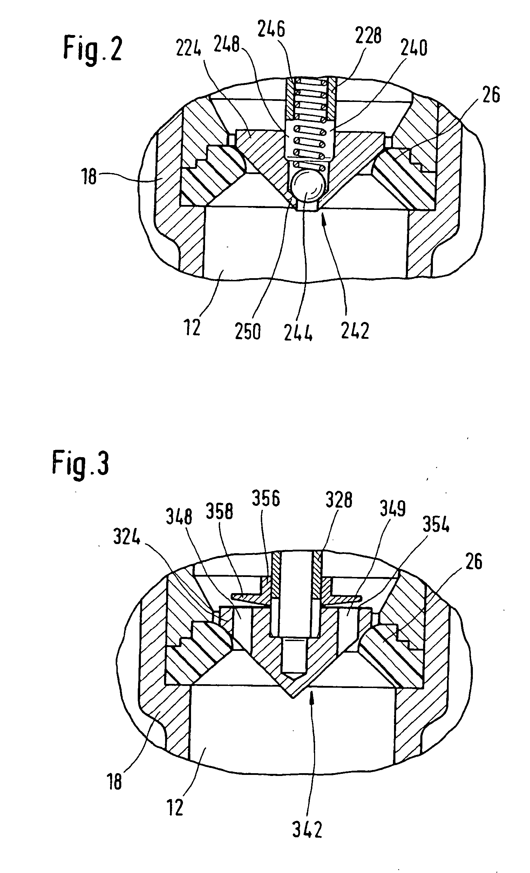

In den Figuren 2 und 3 sind zwei Ausführungsbeispiele für ein erfindungsgemäßes Ventil in einer Detailansicht dargestellt. Es ist jeweils nur ein Teil der Ventilkammer mit dem Ventilglied und dem Ventilsitz 26 dargestellt. Ansonsten entsprechen die nachfolgenden Ausführungsbeispiele dem in Figur 1 beschriebenen Ventil.

Figur 2 zeigt ein erstes Ausführungsbeispiel für das Ventilglied 224 eines erfindungsgemäßen Ventils.

Das Ventilglied 222 wurde derart modifiziert, dass es bei Erreichen eines bestimmten Druckes über dem Ventil öffnet, das heisst, einen Verbindungskanal 240 zwischen dem Einlasskanal 12 und dem Auslasskanal 14 freigibt, obwohl sich der Dichtkegel 224 des Ventilgliedes 222 beispielsweise bereits auf dem Ventilsitz 26 befindet. Hierbei ist die Überdruckfunktion durch ein Überdruckventil 242, welches in Form einer Kugel 244 und einem Federelement 246 in das Ventilglied 222 integriert ist, realisiert worden. Das Ventilglied 222 besitzt eine durchgehende Bohrung 248, in der die Kugel 244 lose gelagert ist. Das Federelement 246, das sich an einem Anschlag in der Hubstange 228 abstützt, übt eine Kraft auf die Kugel 244 aus. Dadurch liegt diese an einer inneren Dichtfläche 250 der Bohrung 248 des Ventilgliedes 224 an und verschließt normalerweise die als Verbindungskanal 240 dienende Bohrung 248, so dass das Ventilglied 224 die Verbindung zwischen dem Einlasskanal 12 und dem Auslasskanal 14 verschließen kann. Übersteigt nun, insbesondere während des Schließvorganges des Ventils, der Druck auf das Ventilglied 222 einen bestimmten Grenzwert (Grenzdruck), so wird die Kugel 244 gegen die Kraft des Federelementes 246 angehoben und der Verbindungskanal 240 zwischen dem Einlasskanal 12 und dem Auslasskanal 14 des erfindungsgemäßen Ventils wird geöffnet, so dass ein gewisser Druckausgleich stattfinden kann. Durch diesen Druckausgleich wird eine Reduzierung der Druckspitzen beim Schließen des erfindungsgemäßen Ventils erreicht.

Durch die Integration des Überdruckventils 242 in das Ventilglied 222 bleibt in vorteilhafter Weise die Größe des Ventils 10 unverändert. Auch auf die Ansprechzeit des Ventils hat diese Maßnahme keinen Einfluss.

Figur 3 zeigt ein zweites Ausführungsbeispiel für das Ventilglied 322 des erfindungsgemäßen Ventils.

Der Ventilkegel 324 des Ventilgliedes 322 wurde ebenfalls derart modifiziert, dass er bei Erreichen eines bestimmten Druckes (Grenzdruck) über dem Ventil, unabhängig von der Position des Ventilgliedes 322, öffnet und eine Verbindung zwischen dem Einlasskanal 12 und dem Auslasskanal 14 des Ventils freigibt. Das Rückschlag- beziehungsweise Überdruckventil 342 des Ventilgliedes des zweiten Ausführungsbeispiels gemäß Figur 3 weist zwei Bohrungen 348 beziehungsweise 349 auf, die durch den Dichtkegel 324 hindurch geführt sind. Die Bohrungen 348 beziehungsweise 349 werden von einer Dichtscheibe in Form einer Blattfeder 354 abgedeckt. Die Dichtscheibe 354 ist dabei auf der dem Aktuator 34 zugewandeten Seite des Dichtkegels 324 des Ventilgliedes 322 angeordnet ist. Die Blattfeder 354, die vorzugsweise aus einem Blech besteht, aber auch aus anderen Materialien gefertigt sein kann, wird durch eine Haltescheibe 356 gegen den Dichtkegel 324 gedrückt und somit in ihrer axialen Lage fixiert. Dabei drückt die Haltescheibe 356 die Blattfeder 354 lediglich in ihrem radial inneren Bereich, nahe der Hubstange 328 an den Dichtkegel 324 an. Die Haltescheibe 356, die mit der Hubstange 328 fest verbunden, beispielsweise auf die Hubstange aufgepresst ist, ist derart ausgeformt, dass sie im Bereich der Bohrungen 348 beziehungsweise 349 einen gewissen axialen Abstand über dem Dichtkegel 324 aufweist. Auf diese Weise ist es möglich, dass sich die Blattfeder 354 von den Bohrungen 348 beziehungsweise 349 abheben kann und eine Verbindung zwischen dem Einlasskanal 12 und dem Auslasskanal 14 freigegeben wird. Die Haltescheibe 356 dient dabei gleichzeitig auch als ein Anschlag 358, der den Hub der Blattfeder 354 begrenzt.

Der Zustand des Ventils, das heisst, die Tatsache, ob die Verbindung zwischen dem Einlasskanal 12 und dem Auslasskanal 14 geöffnet oder geschlossen ist, ist abhängig von den Kräften, die auf die Blattfeder 354 einwirken. Das Kräfteverhältnis an der Blattfeder 354 wird im Wesentlichen bestimmt durch den Bohrungsquerschnitt der Bohrungen 348 beziehungsweise 349 und der Fläche, die von der Blattfeder 356 abgedeckt wird. Bei einem Kräftegleichgewicht werde die Bohrungen 348 beziehungsweise 349 im Dichtkegel 324 durch die Blattfeder 354 verschlossen. Bei einem Überdruck im Einlasskanal 12 des erfindungsgemäßen Ventils wird die Blattfeder 354 in ihren radial äusseren Bereichen jedoch vom Dichtkegel 324 abgehoben und gibt die Verbindung frei. Dadurch reduziert sich in vorteilhafter Weise die Druckdifferenz zwischen dem Einlasskanal 12 und dem Auslasskanal 14 des Ventils, so dass dem Auftreten von Druckspitzen im Flüssigkeitskreislauf entgegengewirkt werden kann..

In anderen Ausführungsbeispielen können auch weniger beziehungsweise mehr Bohrungen im Dichtkegel vorgesehen sein, die beispielsweise auch jeweils mit einer eigenen Blattfeder als Dichtscheibe versehen sein können.

Das erfindungsgemäße Ventil ist nicht auf die in den Figuren 1 bis 3 dargestellten Ausführungsformen beschränkt.

Insbesondere ist das erfindungsgemäße Ventil nicht beschränkt auf eine Ausführungsform als elektromagnetisch aktiviertes Taktventil. Hydraulische oder pneumatisches Aktuatoren sind beispielsweise neben weiteren Ausführungsformen für das erfindungsgemäße Ventil ebenso möglich.

Auch ist das erfindungsgemäße Ventil nicht beschränkt auf das Vorliegen lediglich eines Ventilgliedes, sondern kann in vorteilhafter Weise auch für Ventile mit beispielsweise zwei Auslasskanälen mit entsprechend zugeordneten zwei Ventilsitzen verwendet werden.

Das erfindungsgemäße Ventil ist zudem nicht begrenzt auf eine Anwendung in flüssigkeitsgeregelten Heiz- und/oder Kühlanlagen für Kraftfahrzeuge.

## Patentansprüche

1. Ventil insbesondere für eine flüssigkeitsgeregelte Heiz- und/oder Kühlanlage eines Kraftfahrzeuges, mit einer Ventilkammer (16), mit davon abzweigend mindestens einem Einlass- (12) und mindestens einem Auslasskanal (14) sowie mit einer durch einen Aktuator bewegbaren Hubstange (28,228,328), und mit mindestens einem mit der Hubstange (28,228,328) verbundenen Ventilglied (22,222,322), welches mit mindestens einem Ventilsitz (26,226,326) der Ventilkammer (16) derart zusammenwirkt, dass das Ventil in einer ersten Stellung der Hubstange (28,228,328) geschlossen und in einer zweiten Stellung der Hubstange (28,228,328) geöffnet ist, **dadurch gekennzeichnet, dass** das mindestens eine Ventilglied (222,322) ein Überdruckventil (242,342) aufweist, welches derart ausgebildet ist, dass bei Erreichen eines Grenzdruckes auf das Ventilglied (22,222,322), der mindestens eine Einlasskanal (12) mit dem mindestens einen Auslasskanal (14) über das Überdruckventil (242,342) verbunden ist.

2. Ventil nach Anspruch 1, **dadurch gekennzeichnet, dass** das Überdruckventil (242) mindestens ein Kugelelement (244) aufweist, welches einen Verbindungskanal (240) zwischen dem mindestens einen Einlasskanal (12) und dem mindestens einen Auslasskanal (14) öffnet beziehungsweise verschließt.

3. Ventil nach Anspruch 2, **dadurch gekennzeichnet, dass** das mindestens eine Kugelelement (244) durch mindestens ein Federelement (246) derart vorgespannt ist, dass der Verbindungskanal (240) zwischen dem mindestens einen Einlasskanal (12) und dem mindestens eine Auslasskanal (12) für Drücke unterhalb des Grenzdruckes geschlossen ist.

4. Ventil nach Anspruch 1, **dadurch gekennzeichnet, dass** das Überdruckventil (342) in Form eines Blattfederventils (342) ausgebildet ist.

5. Ventil nach Anspruch 4, **dadurch gekennzeichnet, dass** mindestens eine Dichtscheibe (354) mit mindestens einer im Ventilglied (322) angeordneten Bohrung (348,349) derart zusammenwirkt, dass eine Verbindung zwischen dem mindestens einen Einlasskanal (12) und dem mindestens einen Auslasskanal (14) geöffnet beziehungsweise verschlossen wird.

6. Ventil nach Anspruch 4 oder 5, **dadurch gekennzeichnet, dass** der Hub der mindestens einen Dichtscheibe (354) durch ein Anschlagelement (356) begrenzt ist.

7. Ventil nach einem der vorhergehenden Ansprüche, **dadurch gekennzeichnet, dass** das Ventil einen elektromagnetischen Aktuator (34) besitzt.

8. Ventil nach einem der vorherigen Ansprüche, **dadurch gekennzeichnet, dass** von der Ventilkammer (16) des Ventils ein zweiter Auslasskanal mit zugehörigem Ventilsitz und Ventilglied abzweigt.

## Claims

1. Valve, in particular for a fluid-regulated heating and/or cooling system of a motor vehicle, with a valve chamber (16), with, branching off from this, at least one inlet duct (12) and at least one outlet duct (14), and also with a lifting rod (28, 228, 328) movable by means of an actuator and with at least one valve member (22, 222, 322) which is connected to the lifting rod (28, 228, 328) and which cooperates with at least one valve seat (26, 226, 326) of the valve chamber (16) in such a way that the valve is closed in a first position of the lifting rod (28, 228, 328) and is opened in a second position of the lifting rod (28, 228, 328), **characterized in that** the at least one valve member (222, 322) has a pressure relief valve (242, 342) which is designed in such a way that, when a limit pressure on the valve member (22, 222, 322) is reached, the at least one inlet duct (12) is connected to the at least one outlet duct (14) via the pressure relief valve (242, 342).

2. Valve according to Claim 1, **characterized in that** the pressure relief valve (242) has at least one spherical element (244) which opens or closes a connecting duct (240) between the at least one inlet duct (12) and the at least one outlet duct (14).

3. Valve according to Claim 2, **characterized in that** the at least one spherical element (244) is prestressed by at least one spring element (246) in such a way that the connecting duct (240) between the at least one inlet duct (12) and the at least one outlet duct (14) is closed for pressures below the limit pressure.

4. Valve according to Claim 1, **characterized in that** the pressure relief valve (342) is designed in the form of a leaf-spring valve (342).

5. Valve according to Claim 4, **characterized in that** at least one sealing washer (354) cooperates with at least one bore (348, 349) arranged in the valve member (322), in such a way that a connection between the at least one inlet duct (12) and the at least one outlet duct (14) is opened or closed.

6. Valve according to Claim 4 or 5, **characterized in that** the stroke of the at least one sealing washer (354) is limited by a stop element (356).

7. Valve according to one of the preceding claims, **characterized in that** the valve possesses an electromagnetic actuator (34).

8. Valve according to one of the preceding claims, **characterized in that** a second outlet duct with an associated valve seat and valve member branches off from the valve chamber (16) of the valve.

## Revendications

1. Soupape, en particulier pour un système de refroidissement et/ou de chauffage régulé par liquide d'une automobile, comportant une chambre de soupape (16), au moins un canal d'entrée (12) et au moins un canal de sortie (14) dérivant de celle-ci, et une tige de levage (28, 228, 328) mobile par un actionneur, et au moins un élément de soupape (22, 222, 322) relié à la tige de levage (28, 228, 328) coopérant avec au moins un siège de soupape (26, 226, 326) de la chambre de soupape (16) de telle manière que la soupape soit fermée dans une première position de la tige de levage (28, 228, 328) et ouverte dans une seconde position de la tige de levage (28, 228, 328),
**caractérisée en ce que**
l'élément de soupape (222, 322) comporte une soupape de surpression (242, 342) telle que, lorsqu'une pression limite est atteinte sur l'élément de soupape (22,222,322), le canal d'entrée (12) est relié au canal de sortie (14) par la soupape de surpression (242,342).

2. Soupape selon la revendication 1,
**caractérisée en ce que**
la soupape de surpression (242) présente au moins un élément sphérique (244) qui ouvre ou ferme un canal de liaison (240) entre le canal d'entrée (12) et le canal de sortie (14).

3. Soupape selon la revendication 2,
**caractérisée en ce que**
l'élément sphérique (244) est précontraint par au moins un élément ressort (246) de telle manière que le canal de liaison (240) est fermé entre le canal d'entrée (12) et le canal de sortie (12) pour les pressions en-dessous de la pression limite.

4. Soupape selon la revendication 1,
**caractérisée en ce que**
la soupape de surpression (342) est une soupape à ressorts à lames (342).

5. Soupape selon la revendication 4,
**caractérisée en ce qu'**
un disque d'étanchéité (354) coopère avec au moins un alésage (348, 349) dans l'élément de soupape (322) pour ouvrir ou fermer une liaison entre le canal d'entrée (12) et le canal de sortie (14).

6. soupape selon la revendication 4 ou 5,
**caractérisée en ce que**
la course du disque d'étanchéité (354) est limitée par un élément de butée (356).

7. Soupape selon l'une quelconque des revendications précédentes,
**caractérisée en ce que**
la soupape possède un actionneur électromagnétique (34).

8. Soupape selon l'une quelconque des revendications précédentes,
**caractérisée en ce qu'**
un second canal de sortie comportant un siège de soupape associé et un élément de soupape dérive de la chambre de soupape (16).
